# EUROPEAN PATENT APPLICATION

(11) **EP 4 382 203 A1**
(43) Date of publication of application: **12.06.2024**
(21) Application number: 22852785.9
(22) Date of filing: 07.07.2022
(51) Int. Cl.: B01J 29/76, B01D 53/94, B01J 37/04, B01J 37/08

(54) **EXHAUST GAS PURIFICATION CATALYST**

(30) Priority: 04.08.2021 JP 2021128488
(71) Applicant: CATALER CORPORATION, Kakegawa-shi, Shizuoka 437-1492 (JP)
(72) Inventor: AMADA, Takehiro, Kakegawa-shi, Shizuoka 437-1492 (JP); SUGIOKA, Daisuke, Kakegawa-shi, Shizuoka 437-1492 (JP); HORI, Keigo, Kakegawa-shi, Shizuoka 437-1492 (JP); IMAI, Hiroto, Kakegawa-shi, Shizuoka 437-1492 (JP)
(74) Representative: Wallinger Ricker Schlotter Tostmann
(86) International application number: PCT/JP2022/026992
(87) International publication number: WO 2023/013359

(57) **Abstract**

An exhaust gas purification catalyst containing Cu-CHA zeolite, wherein the Cu-CHA zeolite has a silica-to-alumina ratio (SAR) of no higher than 20.0 and includes an alkali metal and an alkaline earth metal.

## Description

### FIELD

The present invention relates to an exhaust gas purification catalyst.

### BACKGROUND

Selective catalytic reduction (SCR) systems are known as a technology for reducing and purifying NOx in an exhaust gas emitted from a diesel engine before the exhaust gas is released into the atmosphere. The SCR system is a technology which uses a reductant, for example, ammonia (or an ammonia source such as urea) to reduce NOₓ in exhaust gas to N₂.

In this SCR system, a Cu-zeolite obtained by subjecting zeolite to ion exchange with copper (Cu) is known as having an excellent NOx purification ability in a low-temperature region.

For example, PTL 1 describes that an exhaust gas purification catalyst using a Cu-CHA type zeolite obtained by subjecting a chabazite-type zeolite, represented by the structural code "CHA", to ion exchange with copper (Cu) has an excellent NOx purification ability.

### [CITATION LIST]

### [PATENT LITERATURE]

[PTL 1] WO 2008/106519

### SUMMARY

### [TECHNICAL PROBLEM]

It is known that NOx purification by an SCR system generates N₂O as a by-product. Since N₂O is a greenhouse gas having an effect on global warming, the emissions thereof should be suppressed.

When a Cu-zeolite having a large silica/alumina ratio (SAR) is used, the amount of N₂O generation can be suppressed, but the NOx purification ability is impaired.

The present invention was made in view of the above circumstances. Therefore, an object thereof is to provide an exhaust gas purification catalyst that has a sufficiently high NOx purification efficiency and a small amount of N₂O generation.

### [SOLUTION TO PROBLEM]

The present invention for achieving the above object is as follows.
«Aspect 1» An exhaust gas purification catalyst comprising a Cu-CHA type zeolite, wherein
   the Cu-CHA type zeolite has a silica-alumina ratio (SAR) of 20.0 or less and comprises an alkali metal and an alkaline earth metal.
«Aspect 2» The exhaust gas purification catalyst according to Aspect 1, wherein a Cu amount in the Cu-CHA type zeolite per mole of Al atoms in the Cu-CHA type zeolite is 0.10 mol/mol-Al or more and 0.40 mol/mol-Al or less.
«Aspect 3» The exhaust gas purification catalyst according to Aspect 1 or 2, wherein
   an amount of the alkali metal per mole of Al atoms in the Cu-CHA type zeolite is 0.005 mol/mol-Al or more, and
   an amount of the alkaline earth metal per mole of Al atoms in the Cu-CHA type zeolite is 0.01 mol/mol-Al or more.
«Aspect 4» The exhaust gas purification catalyst according to any one of Aspects 1 to 3, wherein
   an amount of the alkali metal per mole of Al atoms in the Cu-CHA type zeolite is 0.10 mol/mol-Al or less.
«Aspect 5» The exhaust gas purification catalyst according to any one of Aspects 1 to 4, wherein
   an amount of the alkaline earth metal per mole of Al atoms in the Cu-CHA type zeolite is 0.20 mol/mol-Al or less.
«Aspect 6» The exhaust gas purification catalyst according to any one of Aspects 1 to 5, wherein
   a Bronsted acid content of the Cu-CHA type zeolite is 0.200 mmol/g or less, and
   the Bronsted acid content of the Cu-CHA type zeolite is defined as a value obtained by dividing an integrated value (mmol) of NH₃ amounts measured as follows by a mass (g) of the Cu-CHA type zeolite:
      (i) allowing the Cu-CHA type zeolite to adsorb NH₃ until saturation at 100°C, and
      (ii) heating the Cu-CHA type zeolite allowed to adsorb NH₃ until saturation to 600°C at a rate of 35°C/min under a N₂ gas flow, and integrating NH₃ amounts contained in emitted N₂ gas at temperatures of 350°C or higher to 600°C.
«Aspect 7» The exhaust gas purification catalyst according to any one of Aspects 1 to 6, wherein the alkali metal is of one or two types selected from sodium and potassium.
«Aspect 8» The exhaust gas purification catalyst according to any one of Aspects 1 to 7, wherein the alkaline earth metal is of one or two types selected from barium and calcium.
«Aspect 9» The exhaust gas purification catalyst according to any one of Aspects 1 to 8, which is an SCR catalyst.
«Aspect 10» An exhaust gas purification catalytic device, comprising a substrate and a catalyst layer on the substrate, wherein
   the catalyst layer comprises the exhaust gas purification catalyst according to any one of Aspects 1 to 9.
«Aspect 11» A manufacturing method for the exhaust gas purification catalyst according to any one of Aspects 1 to 9, comprising
   mixing a Cu-CHA type zeolite having an SAR of 20.0 or less with an alkali metal source and an alkaline earth metal source to obtain a mixture, and
   firing the obtained mixture.
«Aspect 12» The manufacturing method for the exhaust gas purification catalyst according to Aspect 11, wherein the alkali metal source is one or more selected from nitrates, carbonates, hydroxides, sulfates, and acetates of alkali metals.
«Aspect 13» The manufacturing method for the exhaust gas purification catalyst according to Aspect 11 or 12, wherein the alkaline earth metal source is one or more selected from nitrates, carbonates, hydroxides, sulfates, and acetates of alkaline earth metals.

### [ADVANTAGEOUS EFFECTS OF INVENTION]

According to the present invention, an exhaust gas purification catalytic device having a sufficiently high NOx purification efficiency and a small amount of N₂O generation is provided.

### DESCRIPTION OF EMBODIMENTS

### «Exhaust gas purification system»

The exhaust gas purification catalyst of the present invention is
an exhaust gas purification catalyst comprising a Cu-CHA type zeolite, wherein
the Cu-CHA type zeolite has a silica-alumina ratio (SAR) of 20.0 or less and comprises an alkali metal and an alkaline earth metal.

In the exhaust gas purification catalyst of the present invention, a Cu-CHA type zeolite having an SAR of 20.0 or less is used. A Cu-zeolite having a low SAR, i.e., a Cu-zeolite having a comparatively large ratio of alumina, has an excellent NOx purification ability. In the present invention, by limiting the SAR of the Cu-CHA type zeolite to 20.0 or less, the NOx purification ability is particularly enhanced.

In the exhaust gas purification catalyst of the present invention, the Cu-CHA type zeolite having a low SAR as described above further comprises an alkali metal and an alkaline earth metal. As a result, N₂O emissions are decreased for the exhaust gas purification catalyst of the present invention.

The reason for which N₂O emissions are decreased in the exhaust gas purification catalyst of the present invention is presumed as follows.

It is considered that the mechanism by which NOx is purified via an SCR reaction is based on the following reactions (1) and (2).

2NO + 4NH₃ + 2O₂ → 3N₂ + 6H₂O (1)

2NO₂ + 2NO + 2NH₃ → 3N₂ + 3H₂O (2)

It is considered that during the SCR reaction, the following side reactions (3) and (4) occur and N₂O is generated.

2NO₂ + 2NH₃ → NH₄NO₃ + N₂ + H₂O (3)

NH₄NO₃ → N₂O + 2H₂O (4)

Of these, it is considered that a Bronsted acid of the zeolite is involved in the side reaction (3), which generates NH₄NO₃ via a reaction between NO₂ and NH₃.

In the exhaust gas purification catalyst of the present invention, it is considered that by covering the Bronsted acid with an alkali metal and an alkaline earth metal to limit the procession of the side reaction (3), generation of N₂O is suppressed.

The present inventors have noticed that the Bronsted acid of the zeolite has a "1A1 site" represented by (A) below and a "2A1 site" represented by (B) below.

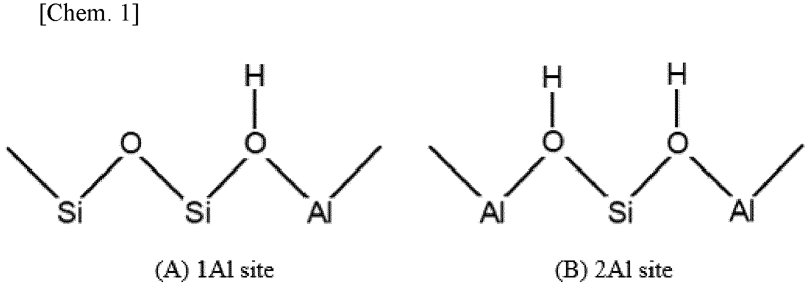

It is considered that monovalent alkali metal ions (M_{AM}) easily cover monovalent 1A1 sites and divalent alkaline earth metal ions (M_{AEM}) easily cover divalent 2A1 sites (refer to "(A') 1A1 site covered by alkali metal" and "(B') 2Al site covered by alkaline earth metal" below).

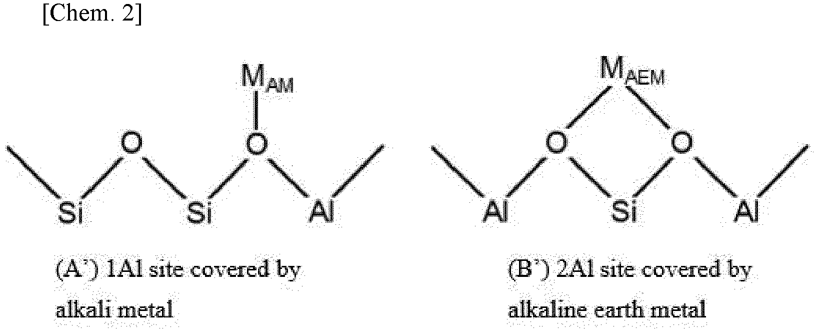

In the present invention, by including both an alkali metal and an alkaline earth metal in a Cu-zeolite having an excellent NOx purification ability and a low SAR, the two types of metals are used in combination to effectively cover the Bronsted acid at both the " 1 Al site" and "2A1 site", thereby suppressing the procession of the side reaction (3) and decreasing the amount of N₂O generation.

The exhaust gas purification catalyst of the present invention has a sufficiently high NOx purification efficiency and a small amount of N₂O generation by the mechanism stated above. However, the present invention is not bound by any specific theory.

Hereinafter, the components of the exhaust gas purification catalyst of the present invention will be described in order.

### <Cu-CHA type zeolite>

The exhaust gas purification catalyst of the present invention comprises a Cu-CHA type zeolite. The "Cu-CHA type zeolite" is a chabazite-type zeolite, represented by the structural code "CHA", that has undergone ion exchange with Cu.

In the exhaust gas purification catalyst of the present invention, the silica-alumina ratio (SAR) of the Cu-CHA type zeolite is 20.0 or less. By using a Cu-CHA type zeolite having an SAR of 20 or less, the NOx purification rate via an SCR reaction, particularly the NOx purification rate in a low-temperature region, is high. The SAR value is shown as a ratio (SiO₂/Al₂O₃) of a molar amount of silica (SiO₂) to a molar amount of alumina (Al₂O₃) in the zeolite.

The SAR of the Cu-CHA type zeolite in the exhaust gas purification catalyst of the present invention may be 18 or less, 16 or less, 15 or less, 12 or less, 10 or less, 8 or less, or 6 or less from the viewpoint of enhancing NOx purification rate. When the SAR is too low, synthesis of the zeolite becomes difficult, which may lead to an excessive increase in catalyst cost. In order to avoid such circumstances, the SAR of the Cu-CHA type zeolite may be 4 or greater, 6 or greater, 8 or greater, or 10 or greater.

The Cu amount in the Cu-CHA type zeolite per mole of Al atoms in the Cu-CHA type zeolite may be 0.10 mol/mol-Al or more, 0.15 mol/mol-Al or more, 0.20 mol/mol-Al or more, 0.25 mol/mol-Al or more, or 0.30 mol/mol-Al or more from the viewpoint of increasing SCR activity of the exhaust gas purification catalyst of the present invention.

Regarding the upper limit of the Cu amount in the Cu-CHA type zeolite, there is no limit from the viewpoint of SCR activity. However, increasing the ion exchange rate of Cu in a CHA-type zeolite is not easy. Therefore, the Cu amount in the Cu-CHA type zeolite per mole of Al atoms in the Cu-CHA type zeolite may be 0.50 mol/mol-Al or less, 0.45 mol/mol-Al or less, 0.40 mol/mol-Al or less, 0.35 mol/mol-Al or less, 0.30 mol/mol-Al or less, or 0.25 mol/mol-Al or less from the viewpoint of properly maintaining manufacturing costs of the exhaust gas purification catalyst.

In the exhaust gas purification catalyst of the present invention, the CHA-type zeolite may undergo ion exchange with Cu and an ion other than Cu. However, in the exhaust gas purification catalyst of the present invention, it is desirable that the ratio of Cu in the ions incorporated into the CHA-type zeolite via ion exchange be high from the viewpoint of exhibiting a high degree of SCR activity. In the exhaust gas purification catalyst of the present invention, the ratio of Cu in all ions incorporated into the CHA-type zeolite via ion exchange may be 80% by mass or greater, 85% by mass or greater, 90% by mass or greater, 95% by mass or greater, 98% by mass or greater, or 99% by mass or greater, or may be 100% by mass.

In the exhaust gas purification catalyst of the present invention, the Cu-CHA type zeolite as described above further comprises an alkali metal and an alkaline earth metal. The Cu-CHA type zeolite "comprising an alkali metal and an alkaline earth metal" refers to a Cu-CHA type zeolite comprising, for example, oxides, compounds, salts, metals, or ions of these metal elements or a combination thereof. In the exhaust gas purification catalyst of the present invention, the chemical forms of the alkali metal and the alkaline earth metal are mutually variable depending on the state in which the exhaust gas purification catalyst is arranged. When the exhaust gas purification catalyst of the present invention comprises an alkali metal and an alkaline earth metal, an expected performance can be exhibited.

The alkali metal may be, for example, one or more selected from lithium, sodium, potassium, rubidium, and cesium, particularly sodium and potassium.

The alkaline earth metal may be, for example, one or more selected from calcium, strontium, and barium, particularly barium and calcium.

The amount of alkali metal in the Cu-CHA type zeolite per mole of Al atoms in the Cu-CHA type zeolite may be 0.005 mol/mol-Al or more, 0.010 mol/mol-Al or more, 0.020 mol/mol-Al or more, 0.030 mol/mol-Al or more, 0.040 mol/mol-Al or more, or 0.050 mol/mol-Al or more to effectively suppress generation of N₂O.

The amount of alkali metal in the Cu-CHA type zeolite per mole of Al atoms in the Cu-CHA type zeolite may be 0.800 mol/mol-Al or less, 0.600 mol/mol-Al or less, 0.400 mol/mol-Al or less, 0.300 mol/mol-Al or less, 0.200 mol/mol-Al or less, 0.100 mol/mol-Al or less, or 0.080 mol/mol-Al or less to maintain NOx purification performance.

The amount of alkaline earth metal in the Cu-CHA type zeolite per mole of Al atoms in the Cu-CHA type zeolite may be 0.005 mol/mol-Al or more, 0.010 mol/mol-Al or more, 0.050 mol/mol-Al or more, 0.100 mol/mol-Al or more, 0.150 mol/mol-Al or more, or 0.200 mol/mol-Al or more to effectively suppress generation of N₂O.

The amount of alkaline earth metal in the Cu-CHA type zeolite per mole of Al atoms in the Cu-CHA type zeolite may be 0.300 mol/mol-Al or less, 0.250 mol/mol-Al or less, 0.200 mol/mol-Al or less, 0.150 mol/mol-Al or less, 0.100 mol/mol-Al or less, or 0.050 mol/mol-Al or less to maintain NOx purification performance.

In order to effectively suppress generation of N₂O, the ratio of the total valence of Cu, the alkali metal, and the alkaline earth metal (2 × Cu (mole) + 1 × alkali metal (mole) + 2 × alkaline earth metal (mole)) per mole of Al atoms in the Cu-CHA type zeolite may be 0.5 mol/mol-Al or more, 0.6 mol/mol-Al or more, 0.7 mol/mol-Al or more, or 0.8 mol/mol-Al or more.

In order to maintain NOx purification performance, the ratio of the total valence of Cu, the alkali metal, and the alkaline earth metal per mole of Al atoms in the Cu-CHA type zeolite may be 1.0 or less, 0.9 or less, or 0.8 or less.

The exhaust gas purification catalyst of the present invention, as described above, is an exhaust gas purification catalyst comprising a Cu-CHA type zeolite, wherein the Cu-CHA type zeolite has an SAR of 20.0 or less and comprises an alkali metal and an alkaline earth metal. The exhaust gas purification catalyst of the present invention may comprise a noble metal, in addition to such a Cu-CHA type zeolite. The noble metal may be supported on the exhaust gas purification catalyst of the present invention.

The noble metal contained in the exhaust gas purification catalyst of the present invention may be selected from platinum group elements, and may be particularly selected from palladium (Pd), platinum (Pt), and rhodium (Rh).

In the Cu-CHA type zeolite contained in the exhaust gas purification catalyst of the present invention, the Bronsted acid (1Al site and 2Al site) is effectively covered by the contained alkali metal and alkaline earth metal, and the Bronsted acid content is decreased.

The Bronsted acid content of the Cu-CHA type zeolite contained in the exhaust gas purification catalyst of the present invention, as a millimole amount of Bronsted acid sites per g of the Cu-CHA type zeolite, may be 0.200 mmol/g or less, 0.190 mmol/g or less, 0.180 mmol/g or less, or 0.170 mmol/g or less. The Bronsted acid content of the Cu-CHA type zeolite may be 0.100 mmol/g or more, 0.120 mmol/g or more, or 0.150 mmol/g or more.

The Bronsted acid content of the above Cu-CHA type zeolite is defined as a value obtained by dividing an integrated value (mmol) of NH₃ amounts measured as follows by the mass (g) of the Cu-CHA type zeolite:
(i) allowing the Cu-CHA type zeolite to adsorb NH₃ until saturation at 100°C, and
(ii) heating the Cu-CHA type zeolite allowed to adsorb NH₃ until saturation to 600 °C at a rate of 35°C/min under a N₂ gas flow, and integrating the NH₃ amounts contained in the emitted N₂ gas at temperatures of 350°C or higher to 600°C.

The exhaust gas purification catalyst of the present invention as described above is suitable as an SCR catalyst.

### <<Manufacturing method for exhaust gas purification catalyst>>

The exhaust gas purification catalyst of the present invention may be manufactured, for example, by a method comprising
mixing a Cu-CHA type zeolite having an SAR of 20.0 or less with an alkali metal source and an alkaline earth metal source to obtain a mixture, and
firing the obtained mixture.

The Cu-CHA type zeolite having an SAR of 20.0 or less may be manufactured by subjecting a CHA-type zeolite having an SAR of 20.0 or less to ion exchange with Cu ions. The ion exchange may be carried out by bringing the CHA-type zeolite having an SAR of 20.0 or less in contact with a Cu ion source.

The Cu ion source may be a salt such as copper acetate or copper sulfate.

The mixing of the CHA-type zeolite having an SAR of 20.0 or less and the Cu ion source may be either dry mixing or wet mixing. Dry mixing may be carried out by mixing the two in a suitable mixer. Wet mixing may be carried out by mixing the two in a suitable solvent (for example, in water).

The alkali metal source may be a nitrate, an acetate, a carbonate, a sulfate, or a hydroxide of an alkali metal, and one or more selected therefrom may be used. The alkaline earth metal source may be a nitrate, an acetate, a carbonate, a sulfate, or a hydroxide of an alkaline earth metal, and one or more selected therefrom may be used.

The mixing of the Cu-CHA type zeolite having an SAR of 20.0 or less with the alkali metal source and the alkaline earth metal source may be either dry mixing or wet mixing. Dry mixing may be carried out by mixing the components in a suitable mixer. Wet mixing may be carried out by mixing the components in a suitable solvent (for example, in water).

The mixture obtained by dry-mixing or wet-mixing the Cu-CHA type zeolite having an SAR of 20.0 or less with the alkali metal source and the alkaline earth metal source is then fired to obtain the exhaust gas purification catalyst of the present invention.

The firing of the mixture may be carried out by a known method.

### «Exhaust gas purification catalytic device»

According to another aspect of the present invention, an exhaust gas purification catalytic device is provided.

The exhaust gas purification catalytic device of the present invention is
an exhaust gas purification catalytic device, comprising a substrate and a catalyst layer on the substrate, wherein
the catalyst layer comprises the exhaust gas purification catalyst of the present invention described above.

The substrate may be appropriately selected according to the substrate of the desired exhaust gas purification catalytic device. The constituent material of the substrate may be, for example, cordierite or a metal. The substrate may be of a straight-flow or wall-flow type.

The substrate of the exhaust gas purification catalytic device of the present invention may typically be, for example, a straight-flow or wall-flow type cordierite monolith honeycomb substrate.

The catalyst layer in the exhaust gas purification catalytic device of the present invention comprises the exhaust gas purification catalyst of the present invention. The catalyst layer, in addition to the exhaust gas purification catalyst of the present invention, may comprise an additional component. The additional component of the catalyst layer may be, for example, an inorganic oxide other than the Cu-CHA type zeolite or a binder.

The inorganic oxide other than the Cu-CHA type zeolite contained in the catalyst layer may be an oxide of one or more elements selected from, for example, aluminum, silicon, titanium, zirconium, and rare earth elements. Specific examples of the inorganic oxide include alumina, zirconia, and ceria. A noble metal may be supported on one or more of these inorganic oxides.

Examples of the binder contained in the catalyst layer include alumina-based binders, zirconia-based binders, silica-based binders, and titania-based binders.

### «Manufacturing method for exhaust gas purification catalytic device»

The exhaust gas purification catalytic device of the present invention may be manufactured by any method.

The exhaust gas purification catalytic device of the present invention may be manufactured by, for example, a method comprising forming a catalyst layer on a substrate.

The substrate may be appropriately selected according to the substrate of the desired exhaust gas purification catalytic device. The substrate may be, for example, a straight-flow type cordierite monolith honeycomb substrate.

The substrate is coated with a coating liquid comprising the exhaust gas purification catalyst of the present invention to form a coating layer and the obtained coating layer is fired, whereby a catalyst layer is formed on the substrate. The coating layer may be dried after coating and before firing as needed.

The coating liquid may comprise the exhaust gas purification catalyst of the present invention and any component or a precursor thereof as needed. The solvent for the coating liquid may be water or an aqueous organic solvent or a mixture thereof, and is typically water.

The coating of the coating liquid and the drying and firing after coating may each be carried out based on a known method.

### EXAMPLES

### <<Comparative Example 1>>

### (1) Manufacture of exhaust gas purification catalytic device

A Cu-CHA type zeolite having a silica-alumina ratio (SAR) of 26.0 and a Cu amount per Al atom of 0.08 mol/mol-Al, a silicone-based binder, and water were mixed to obtain a slurry for coating to form a catalyst layer having a solid content concentration of 30% by mass.

The above slurry for coating to form a catalyst layer was applied on a straight-flow type cordierite honeycomb substrate having an apparent volume of about 1 L so as to achieve a coating amount after drying of 120 g/L and fired in air at 500°C for 1 h, whereby an exhaust gas purification catalytic device was manufactured.

### (2) Hydrothermal endurance

The obtained exhaust gas purification catalytic device was subjected to hydrothermal endurance at a catalyst layer temperature of 650°C for 50 h while air comprising 10% by mass of water vapor was circulated.

### (3) Evaluation of SCR performance

A model gas having the composition below was supplied to the exhaust gas purification catalytic device after hydrothermal endurance at a space velocity of 80,000 h⁻¹, and while circulating the model gas, N₂O emissions and NOx purification rate at an input gas temperature of 300°C and NOx purification rate at an input gas temperature of 600°C were evaluated. These amounts were evaluated based on the composition of the emitted gas after the composition was stabilized, according to the following criteria.
N₂O emissions: N₂O concentration (ppm) in emitted gas after the composition was stabilized
NOx purification rate (%): {1 - (NOx concentration in emitted gas (ppm)/NOx concentration in supplied gas (ppm)} × 100

The concentration unit "ppm" described above is parts per million based on mass.

The composition of the model gas is shown in Table 1.

### [Table 1]

**Table 1**

| | |
|---|---|
| NO | 500 ppm |
| NH₃ | 500 ppm |
| O₂ | 10 vol% |
| H₂O | 5 vol% |
| N₂ | balance |
| Space velocity | 80,000 h⁻¹ |

### <<Comparative Examples 2 and 3>>

Except that a Cu-CHA type zeolite having the values of SAR and Cu amount indicated in Table 2 was used as the Cu-CHA type zeolite, an exhaust gas purification catalytic device was manufactured, subjected to hydrothermal endurance, and evaluated for N₂O emissions and NOx purification rate, in the same manner as in Comparative Example 1.

The above results are shown in Table 2.

### [Table 2]

**Table 2.**

| | Cu-CHA | | N₂O generation amount (ppm) | NOx purification rate (%) |
|---|---|---|---|---|
| | SAR | Cu amount (mol/mol-Al) | | |
| Comparative Example 1 | 26.0 | 0.08 | 3.4 | 84 |
| Comparative Example 2 | 15.0 | 0.30 | 9.6 | 92 |
| Comparative Example 3 | 7.5 | 0.22 | 12.7 | 92 |

With reference to Table 2, in the exhaust gas purification catalytic device of Comparative Example 1 in which the Cu-CHA type zeolite had an SAR as high as 26.0, although the generation amount of N₂O was as low as 3.4 ppm, the NOx purification rate was as low as 84%. In contrast, in Comparative Example 2 in which a Cu-CHA type zeolite having an SAR of 15.0 was used and Comparative Example 3 in which a Cu-CHA type zeolite having an SAR of 7.5 was used, the NOx purification rates were as high as 92%, but the generation amounts of N₂O were increased to 9.6 ppm or 12.7 ppm.

From the above, it was confirmed that it is appropriate for the present invention to have the purpose of decreasing the generation amount of N₂O while maintaining a high NOx purification rate in the Cu-CHA type zeolite having an SAR of about 20.0 or less.

### <<Example 1>>

### (1) Manufacture of exhaust gas purification catalytic device

A Cu-CHA type zeolite having an SAR of 7.5 and a Cu amount per Al atom of 0.22 mol/mol-Al, which was the same as that used in Comparative Example 3, and an alkali metal source and an alkaline earth metal source were dry-mixed in a mortar for 30 min. The obtained mixture was fired in air at 500°C for 3 h to obtain a Cu-CHA type zeolite (AM-AEM-containing Cu-CHA) comprising an alkali metal (AM) and an alkaline earth metal (AEM).

In Example 1, potassium nitrate was used as the alkali metal source and barium acetate as the alkaline earth metal source. An amount of metal atoms of each thereof per mole of Al atoms in the Cu-CHA type zeolite was added so as to achieve ratios of K/Al = 0.05 (mol/mol) and Ba/Al = 0.03 (mol/mol).

Except that the AM-AEM-containing Cu-CHA obtained above was used in place of the Cu-CHA type zeolite, an exhaust gas purification catalytic device was manufactured, subjected to hydrothermal endurance, and evaluated for N₂O emissions and NOx purification rate, in the same manner as in Comparative Example 1.

### «Examples 2 to 4 and Comparative Examples 4 to 11»

Except that the type and amount of the alkali metal and the amount of the alkaline earth metal were changed as described in Table 3, an exhaust gas purification catalytic device was manufactured, subjected to hydrothermal endurance, and evaluated for N₂O emissions and NOx purification rate, in the same manner as in Example 1. In Table 3, the amounts of the alkali metal and the alkaline earth metal are each shown as an amount of metal atoms per mole of Al atoms in the zeolite.

The following compounds were used for the alkali metal source and the alkaline earth metal source according to the type of metal. Note that the "-" in Table 3 indicates that an alkali metal or an alkaline earth metal corresponding to the column was not added.
K: potassium nitrate
Na: sodium nitrate
Ba: barium acetate

The above results are shown in Table 3 with the results of Comparative Example 3.

### <Measurement of Bronsted acid content of Cu-CHA type zeolite>

Regarding the Cu-CHA type zeolites obtained in Comparative Examples 3 and 5 and Examples 2 and 3, the Bronsted acid contents (B acid contents) were measured by the following method.

An N₂ gas comprising NH₃ at 750 ppm was circulated through an exhaust gas purification catalytic device manufactured using the Cu-CHA type zeolite of each of the Comparative Examples and Examples at a catalyst layer temperature of 100°C at a space velocity of 600 h⁻¹ for 30 min to thereby allow the exhaust gas purification catalytic device to adsorb NH₃ until saturation. The circulating gas was then switched to N₂ gas and circulated at a space velocity of 600 h⁻¹, during which the catalyst layer temperature was increased to 600°C at a rate of 35 °C/min. At this time, the value obtained by dividing the integrated value (mmol) of the NH₃ amounts contained in the exhaust gas at temperatures of 350°C or higher to 600°C by the mass (g) of the Cu-CHA type zeolite in the exhaust gas purification catalytic device was designated as the B acid content per g of the Cu-CHA type zeolite.

The B acid contents obtained are shown in Table 3.

### [Table 3]

**Table 3.**

| | Cu-CHA | | Alkali metal | | Alkaline earth metal | | B acid content (mmol/g) | N₂O generation amount (ppm) | NOx purification rate (%) | |
|---|---|---|---|---|---|---|---|---|---|---|
| | SAR | Cu amount (mol/ mol-Al) | Type | Amount (mol/ mol-Al) | Type | Amount (mol/ mol-Al) | | | 300 °C | 600 °C |
| Comparative Example 3 | 7.5 | 0.22 | - | 0 | - | 0 | 0.221 | 12.7 | 92 | 69 |
| Example 1 | 7.5 | 0.22 | K | 0.05 | Ba | 0.03 | - | 9.6 | 91 | - |
| Example 2 | 7.5 | 0.21 | K | 0.05 | Ba | 0.10 | 0.187 | 7.0 | 92 | 68 |
| Example 3 | 7.5 | 0.22 | K | 0.05 | Ba | 0.25 | 0.162 | 3.3 | 87 | 65 |
| Example 4 | 7.5 | 0.22 | Na | 0.05 | Ba | 0.10 | - | 7.2 | 92 | 66 |
| Comparative Example 4 | 7.5 | 0.22 | K | 0.05 | - | 0 | - | 12.3 | 94 | - |
| Comparative Example 5 | 7.5 | 0.22 | Na | 0.24 | - | 0 | 0.201 | 11.5 | 94 | - |
| Comparative Example 6 | 7.5 | 0.22 | Na | 0.46 | - | 0 | - | 11.2 | 91 | - |
| Comparative Example 7 | 7.5 | 0.22 | Na | 0.66 | - | 0 | - | 11.0 | 90 | - |
| Comparative Example 8 | 7.5 | 0.22 | - | 0 | Ba | 0.05 | - | 11.0 | 95 | - |
| Comparative Example 9 | 7.5 | 0.22 | - | 0 | Ba | 0.20 | - | 6.6 | 92 | 52 |
| Comparative Example 10 | 7.5 | 0.22 | - | 0 | Ba | 0.25 | - | 6.4 | 89 | 49 |
| Comparative Example 11 | 7.5 | 0.22 | - | 0 | Ba | 0.33 | - | 6.6 | 81 | 43 |

In a comparison between Comparative Example 3, Examples 2 and 3, and Comparative Example 5, the decrease in the amount of B acid sites was greater in Examples 2 and 3 each comprising both an alkali metal and an alkaline earth metal in the Cu-CHA type zeolite than the case (Comparative Example 5) comprising only an alkali metal in the Cu-CHA type zeolite.

The following was found in a comparison between Examples 1 to 5 and Comparative Examples 4 to 11. Specifically, in Comparative Examples 4 to 7 each comprising only an alkali metal, the generation amount of N₂O was not suppressed. In Comparative Examples 8 to 11 each comprising only an alkaline earth metal, although the generation amount of N₂O was suppressed and NOx purification rate at low temperatures (300°C) was maintained, there was a remarkable decrease in NOx purification rate at high temperatures (600°C).

In contrast, in Examples 1 to 4 each comprising both an alkali metal and an alkaline earth metal, the generation amount of N₂O was effectively decreased while NOx purification rate was maintained at a high level.

### «Example 5 and Comparative Example 12»

Except that the types and amounts of the alkali metal and the alkaline earth metal were changed as described in Table 4, an exhaust gas purification catalytic device was manufactured, subjected to hydrothermal endurance, and evaluated for N₂O emissions and NOx purification rate at an input gas temperature of 300°C, in the same manner as in Example 1. In Table 4, the amounts of alkali metal and alkaline earth metal are each shown as an amount of metal atoms per mole of Al atoms in the zeolite.

In Example 5 and Comparative Example 12, calcium was used as the alkaline earth metal, and calcium nitrate was used as the alkaline earth metal source.

The obtained evaluation results are shown in Table 4 with the above evaluation results of Comparative Example 3.

### [Table 4]

**Table 4.**

| | Cu-CHA | | Alkali metal | | Alkaline earth metal | | B acid content (mmol/g) | N₂O generation amount (ppm) | NOx purification rate @ 300°C (%) |
|---|---|---|---|---|---|---|---|---|---|
| | SAR | Cu amount (mol/ mol-Al) | Type | Amount (mol/ mol-Al) | Type | Amount (mol/ mol-Al) | | | |
| Comparative Example 3 | 7.5 | 0.22 | - | 0 | - | 0 | 0.221 | 12.7 | 92 |
| Example 5 | 7.5 | 0.22 | K | 0.05 | Ca | 0.10 | N/A | 9.1 | 92 |
| Comparative Example 12 | 7.5 | 0.22 | - | 0 | Ca | 0.10 | N/A | 12.2 | 93 |

As is clear from Tabled, when the Cu-CHA type zeolite comprised only calcium as the alkaline earth metal (Comparative Example 12), there were no substantial changes to the N₂O emissions and NOx purification rate at an input gas temperature of 300°C, whereas in Example 5 comprising potassium as the alkali metal and calcium as the alkaline earth metal, N₂O emissions were effectively decreased while NOx purification rate at an input gas temperature of 300°C was maintained.

### <<Example 6>>

A Cu-CHA type zeolite having an SAR of 15.0 and a Cu amount per Al atom of 0.30 mol/mol-Al, which was the same as that used in Comparative Example 2, and an alkali metal source and an alkaline earth metal source were dry-mixed in a mortar for 30 min. The obtained mixture was fired in air at 500°C for 3 h to obtain a Cu-CHA type zeolite (AM-AEM-containing Cu-CHA) comprising an alkali metal source and an alkaline earth metal.

In Example 6, sodium nitrate was used as the alkali metal source and barium acetate as the alkaline earth metal source. An amount of metal atoms of each thereof per mole of Al atoms in the Cu-CHA type zeolite was added so as to achieve ratios of Na/Al = 0.01 (mol/mol) and Ba/Al = 0.10 (mol/mol).

Except that the AM-AEM-containing Cu-CHA obtained above was used in place of the Cu-CHA type zeolite, an exhaust gas purification catalytic device was manufactured, subjected to hydrothermal endurance, and evaluated for N₂O emissions and NOx purification rate, in the same manner as in Comparative Example 1.

The obtained evaluation results are shown in Table 5 with the above evaluation results of Comparative Example 2.

### [Table 5]

**Table 5.**

| | Cu-CHA | | Alkali metal | | Alkaline earth metal | | N₂O generation amount (ppm) | NOx purification rate (%) |
|---|---|---|---|---|---|---|---|---|
| | SAR | Cu amount (mol/ mol-Al) | Type | Amount (mol/ mol-Al) | Type | Amount (mol/ mol-Al) | | |
| Comparative Example 2 | 15.0 | 0.30 | - | 0 | - | 0 | 9.6 | 92 |
| Example 6 | 15.0 | 0.30 | Na | 0.01 | Ba | 0.10 | 5.8 | 92 |

From the results of Table5, it was confirmed that even when a Cu-CHA having an SAR of 15.0 was used, the generation amount of N₂O was decreased while a high degree of NOx purification rate exhibited by an exhaust gas purification catalytic device not comprising an alkali metal or an alkaline earth metal (Comparative Example 2) was maintained in an exhaust gas purification catalytic device comprising both thereof (Example 6).

## Claims

1. An exhaust gas purification catalyst comprising a Cu-CHA type zeolite, wherein
the Cu-CHA type zeolite has a silica-alumina ratio (SAR) of 20.0 or less and comprises an alkali metal and an alkaline earth metal.

2. The exhaust gas purification catalyst according to claim 1, wherein a Cu amount in the Cu-CHA type zeolite per mole of Al atoms in the Cu-CHA type zeolite is 0.10 mol/mol-Al or more and 0.40 mol/mol-Al or less.

3. The exhaust gas purification catalyst according to claim 1 or 2, wherein
an amount of the alkali metal per mole of Al atoms in the Cu-CHA type zeolite is 0.005 mol/mol-Al or more, and
an amount of the alkaline earth metal per mole of Al atoms in the Cu-CHA type zeolite is 0.01 mol/mol-Al or more.

4. The exhaust gas purification catalyst according to any one of claims 1 to 3, wherein an amount of the alkali metal per mole of Al atoms in the Cu-CHA type zeolite is 0.10 mol/mol-Al or less.

5. The exhaust gas purification catalyst according to any one of claims 1 to 4, wherein an amount of the alkaline earth metal per mole of Al atoms in the Cu-CHA type zeolite is 0.20 mol/mol-Al or less.

6. The exhaust gas purification catalyst according to any one of claims 1 to 5, wherein
a Bronsted acid content of the Cu-CHA type zeolite is 0.200 mmol/g or less, and
the Bronsted acid content of the Cu-CHA type zeolite is defined as a value obtained by dividing an integrated value (mmol) of NH₃ amounts measured as follows by a mass (g) of the Cu-CHA type zeolite:
(i) allowing the Cu-CHA type zeolite to adsorb NH₃ until saturation at 100°C, and
(ii) heating the Cu-CHA type zeolite allowed to adsorb NH₃ until saturation to 600°C at a rate of 35°C/min under a N₂ gas flow, and integrating NH₃ amounts contained in emitted N₂ gas at temperatures of 350°C or higher to 600°C.

7. The exhaust gas purification catalyst according to any one of claims 1 to 6, wherein the alkali metal is of one or two types selected from sodium and potassium.

8. The exhaust gas purification catalyst according to any one of claims 1 to 7, wherein the alkaline earth metal is of one or two types selected from barium and calcium.

9. The exhaust gas purification catalyst according to any one of claims 1 to 8, which is an SCR catalyst.

10. An exhaust gas purification catalytic device, comprising a substrate and a catalyst layer on the substrate, wherein
the catalyst layer comprises the exhaust gas purification catalyst according to any one of claims 1 to 9.

11. A manufacturing method for the exhaust gas purification catalyst according to any one of claims 1 to 9, comprising
mixing a Cu-CHA type zeolite having an SAR of 20.0 or less with an alkali metal source and an alkaline earth metal source to obtain a mixture, and
firing the obtained mixture.

12. The manufacturing method for the exhaust gas purification catalyst according to claim 11, wherein the alkali metal source is one or more selected from nitrates, carbonates, hydroxides, sulfates, and acetates of alkali metals.

13. The manufacturing method for the exhaust gas purification catalyst according to claim 11 or 12, wherein the alkaline earth metal source is one or more selected from nitrates, carbonates, hydroxides, sulfates, and acetates of alkaline earth metals.
